(19) Europäisches Patentamt
European Patent Office
Office européen des brevets

(11) EP 1 796 002 A2

(12) EUROPEAN PATENT APPLICATION

(43) Date of publication:
13.06.2007 Bulletin 2007/24

(51) Int Cl.:
*G06F 11/14* (2006.01)

(21) Application number: 06255938.0

(22) Date of filing: 21.11.2006

(84) Designated Contracting States:
AT BE BG CH CY CZ DE DK EE ES FI FR GB GR
HU IE IS IT LI LT LU LV MC NL PL PT RO SE SI
SK TR
Designated Extension States:
AL BA HR MK YU

(30) Priority: 22.11.2005 US 739630 P

(71) Applicant: Exagrid Systems, Inc.
Westboro, MA 01851 (US)

(72) Inventors:
• Therrien, David G.
Nashua, NH 03062 (US)
• Vanderspek, Adrian
Worcester, MA 01609 (US)
• Ramu, Ashok T.
Waltham, MA 02452 (US)

(74) Representative: Crump, Julian Richard John et al
Mintz Levin Cohn Ferris Glovsky & Popeo
Intellectual Property LLP
The Rectory
9 Ironmonger Lane
London EC2V 8EY (GB)

(54) **Method and apparatus for efficiently storing and managing historical versions and replicas of computer data files**

(57) The present invention is associated with a system and a method for providing comprehensive data protection for data, which includes receiving a file and storing a first modified version of the file along with a first difference file, wherein the first difference file contains differences between the first modified version of the file and the received file.

## FIG. 5
Version Chain Within Protection Repository

EP 1 796 002 A2

## Description

CROSS-REFERENCE TO RELATED APPLICATIONS

This application claims priority to U.S. Provisional Patent Application No. 60/739,630 to Therrien et al., filed on November 22, 2005 and entitled "Method and Apparatus for Efficiently Storing and Managing Historical Versions and Replicas of Computer Data Files" and incorporates its contents herein by reference in their entirety. This Application also relates to: U.S. Patent Application No. 10/659,129 to Therrien et al., filed September 10, 2003, entitled "Method and Apparatus for Integrating Primary Data Storage With Local and Remote Data Protection"; U.S. Patent Application No. 10/658,978 to Therrien et al., filed September 10, 2003, entitled "Method and Apparatus for Storage System to Provide Distributed Data Storage and Protection"; U.S. Patent Application No. 10/659,642 to Therrien et al., filed September 10, 2003, entitled "Method and Apparatus for Server Share Migration and Server Recovery Using Hierarchical Storage Management"; U.S. Patent Application No. 10/659,128 to Therrien et al., filed September 10, 2003, entitled "Method and Apparatus for Managing Data Integrity of Backup and Disaster Recovery Data"; and U.S. Provisional Patent Application No. 60/409,684 to Therrien et al., filed October 9, 2002, entitled "System and Method for Consolidating Data Storage and Data Protection". Each of these applications is incorporated herein by reference in its entirety.

BACKGROUND OF THE INVENTION

### Field of the Invention

The present invention relates generally to data storage and management. More specifically, the present invention relates to storing and managing historical versions and replicas of computer files.

### Background of the Invention

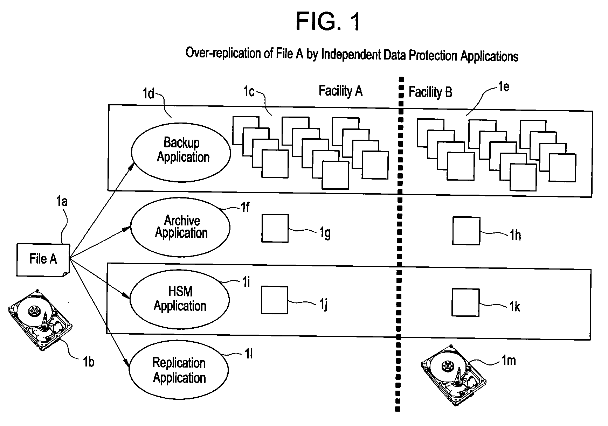

Computer data has traditionally been backed up and archived by companies onto tens to thousands of magnetic tape volumes as a means of preserving the history of their critical data files. The existing tape backup and archiving schemes remain problematic for information technology departments for at least the following reasons. FIG. 1 illustrates issues related to a conventional over-replication of data on tapes and other disk drives using multiple independent data protection tools like backup, archiving, hierarchical storage management, and replication.

Full backups should be performed periodically, e.g., every weekend, to re-capture all data onto a new set of tapes. This is wasteful from a storage resource perspective, because a significant percentage of data being written to a new set of tapes every weekend is the same data that was written to another set of tapes during the previous weekend. The process of performing full backups every weekend is a time-consuming, error-prone, and administratively intensive manual activity.

An alternative to full backups are "incremental-only" backups, however they suffer from similar flaws as the full backups. With incremental-only backups, only changed files are collected from servers and copied to a tape. After incremental backups are performed on the weekend, a "virtual" full set of backup tapes is created from the last full backup tapes and all previous incremental backups. A benefit of incremental-only backups is elimination of full backup traffic over the network. However, these virtual backups still involve a manually intensive full backup tape creation process. Creating virtual full backup tapes from existing full and incremental backup tapes can actually take longer to complete than just collecting the data from the servers to be protected as part of a standard full backup operation. With incremental-only backups and virtual full backups, the issues relating to storing backup data on magnetic tape are no different than with full backups.

Another issue involves the offsite warehousing of backup tapes. Backup tapes are duplicated and shipped to offsite tape storage warehouses to provide disaster recovery from loss of or damage to the primary site. This creates two major issues:

1. The security of tape-based data is jeopardized because the tapes are being handled by multiple people inside and outside of an organization's information systems group; and
2. Reliability of tape-based data is reduced since tapes can be subjected to temperature and humidity levels, which exceed the manufacturer's non-operating environmental limits.

Administrators must manage the long term integrity of their data with a collection of independent data management tools such as backup, archiving, Hierarchical Storage Management ("HSM"), and replication technologies. Each of these applications creates its own replicas and history of data, causing a single original file to be replicated onto dozens of tapes.

When a user requests access to a file maintained in a long-term archive, e.g., a file that is many years old, the following tape-related problems may occur:

1. The requested archive tapes cannot be located, because tapes are mislabeled, misplaced, lost, or stolen;
2. Archive tapes cannot be read with the current version of backup, archive or HSM software due to file format incompatibilities with the version of software that originally wrote the tapes;
3. Archive tapes cannot be read with the current generation of tape drive technology, because of bit density or low-level media format incompatibilities with the tape drive, which was originally used to write the data to the tape;

4. Archive tapes cannot be read because the quality of data on the tape degraded over time while being stored in an offsite warehouse; and

5. Archive tapes cannot be read because the application that was originally supposed to write the tapes failed during the write process and the correct data was never written to tape in the first place.

Magnetic tapes are not as flexible as disk drives when it comes to selectively deleting data. Under certain circumstances, the data on existing backup tapes could be deleted in order to reduce tape storage costs or must be deleted to satisfy regulatory requirements. An archive tape may include files that must be retained commingled with files that should or must be deleted. Because these files are commingled with each other, this may result in accidental deletion of necessary files and/or retention of unnecessary ones.

The data on archive tapes can become corrupt over time. It would be desirable to periodically test tapes to be assured that all of the files on all of the tapes in the archive are still readable. But it takes multiple hours to read a single tape from end to end, and with hundreds to thousands of tapes, this verification process becomes unfeasible. In addition, the tape verification process wears out both the tape media and the tape drive heads, which reduces the overall reliability of future data restore operations.

Periodic backups must still be performed on systems that support disk volume snapshots. Snapshots provide only limited backup history and, in the event of the failure of the primary disk storage system, snapshots are also lost.

Restores of tens to thousands of files resident on backup, archive or HSM tapes can take hours to weeks to complete due to the sequential nature of accessing data on tapes. A single search or rewind on tape can take minutes to complete.

Backup tapes must be duplicated and sent to offsite tape storage vaults to provide recovery from loss or damage of the primary site.

Thus, there is a need for efficient and reliable backup system and method that allow rapid backup of and access to data and that does not consume an excessive amount of time and resources.

SUMMARY OF THE INVENTION

The invention describes the apparatus and the methods that operate on "version chains" of data files. Each version chain is a concise representation of the history of changes to a single user or application file. Unlike traditional backup applications, version chains are aware of prior versions of the same file and they leverage that awareness to create highly compressed forms of backup storage.

The present invention's version chains provide:

• Efficient onsite and offsite replication of backup data for continued access to data in the face of any local or remote system or site disaster. This eliminates the need to make duplicate backup and archive tapes and manually manage their storage and recall from offsite storage facilities.

• A highly compressed format for storing backup data. The invention's delta (or byte-level difference file) versioning capability significantly reduces storage capacity as well as inter-site networking bandwidth as protected data is replicated offsite.

• The ability to quickly and reliably restore an earlier version of a single file. Unlike snapshots, the retention history of the file can extend beyond just a few weeks to an infinite history of the file over time.

• The ability to quickly and reliably restore an entire directory or folder to an earlier point in time.

• The ability to manage the retention and purging of specific versions of protected data.

• The ability to automatically and continually check and correct any version of any protected file.

• The ability to periodically perform test restore operations on current and historical protected data.

• The ability to allow a version chain to represent not only a more condensed equivalent of historical backup data, but also act like a second tier of inactive primary storage. This eliminates the over-replication caused by existing additional data protection tools like archiving, HSM and snapshot systems. This minimizes the number of replicas of protected data from potentially dozens of replicas of each file with today's independent backup, archive, HSM and replication tools to the minimum set required for high availability across two sites, two onsite and two offsite.

In an embodiment, the present invention is a method for protecting data from loss. The method includes receiving a file and storing a first modified version of the file and a first difference file, wherein the first difference file contains differences between the first modified version of the file and the received file. The method also includes replacing the first modified version of the file with a second modified version of the file and storing a second difference file in addition to the first difference file, wherein the second difference file contains differences between the second modified version of the file and the first modified version of the file.

In an alternate embodiment, the present invention is a method of organizing and managing data contained in files, wherein files are contained in folders organized into directories. The method includes receiving an original file and storing the original file in a protection repository. Then, the method detects a modification of the original file and replaces the original file in the repository with the modified version of the original file and a byte-level difference between the modified version of the original file and the original file in the repository. Then, another modification of the original file is detected, wherein the another modification is a modification of the modified version of the original file. The modified version is replaced with the modification of the modified version, the byte-level difference, and storing an another byte-level difference in addition to the byte-level difference, wherein the another byte-level difference contains differences between the modification of the modified version and the modified version. Finally, the method includes storing at least one duplicate copy of the modification of the modified version in another protection repository other than the original repository. The storing includes storing the modification of the modified version in the another repository and transferring copies of the byte-level difference and the another byte-level difference to the another repository.

In yet another embodiment, the present invention is a system for protecting data from loss. The system includes a storage facility that includes a file storage server configured to receive a file. The system also includes at least one protection repository coupled to the file storage server. The at least one protection repository is configured to store a first modified version of the file along with a first difference file, wherein the first difference file contains differences between the first modified version of the file and the received file. The protection repository is also configured to replace the first modified version of the file with a second modified version of the file and store a second difference file in addition to the first difference file, wherein the second difference file contains differences between the second modified version of the file and the first modified version of the file.

BRIEF DESCRIPTION OF THE DRAWINGS

FIG. 1 illustrates issues related to a conventional over-replication of data on tapes and other disk drives using multiple independent data protection tools like backup, archiving, hierarchical storage management, and replication.
FIG. 2 illustrates an exemplary embodiment of integrated data protection design that provides high-availability data protection with a minimal number of copies to ensure no single points of failure, according to the present invention.
FIG. 3 illustrates an exemplary data storage and data protection apparatus deployed within two facilities, according to the present invention.
FIG. 4 illustrates an exemplary relationship between clients and applications, file storage servers, shares, protection policies and onsite and offsite protection repositories, according to the present invention.
FIG. 5 illustrates an exemplary version chain for a single file that is being updated over time, according to the present invention.
FIG. 6 illustrates an exemplary method for protecting data within version chains as data changes over time within an onsite protection repository, according to the present invention.
FIG. 7 illustrates an exemplary structure for version chains replication within two protection repositories in order to provide quadruple protection of every version of every client or application file, according to the present invention.
FIG. 8 illustrates an exemplary schematic representation of a method for backup processing of redundant version chains across two protection repositories, according to the present invention.
FIG. 9 is a flowchart illustrating a method depicted in FIG. 8, according to the present invention.
FIG. 10 illustrates an exemplary administrator interface for restoring any of three versions of a single file to a user or application that has lost or deleted a file, according to the present invention.
FIG. 11a and FIG. 11b illustrate exemplary interface screens that allow an administrator to restore a collection of files within a folder that were lost or deleted to an earlier date and time, according to the present invention.
FIG. 12 illustrates an exemplary timeline of events associated with processing a request for restoring a collection of files from an earlier point in time, according to the present invention.
FIG. 13a illustrates an exemplary embodiment of a version chain that has been replicated to two local and two remote protection servers, according to the present invention.
FIG. 13b illustrates an exemplary embodiment of a checksum file that is associated with each version file shown in FIG. 13a, according to the present invention.
FIG. 13c is a flowchart illustrating an exemplary method for checking and correcting each version in a version chain on a continual basis within each protection server of a protection repository shown in FIGS. 13a and 13b, according to the present invention.
FIG. 14 illustrates an exemplary embodiment of a protection policy management interface that allows an administrator to specify the retention management to apply to all files and their versions created on the storage server, including selection of "keep all versions" option, according to the present invention.
FIG. 15a illustrates the protection policy management interface shown in FIG. 14 having a "Purge prior versions that are older than ..." option selected.
FIG. 15b illustrates an exemplary timeline of events associated with purging prior versions that are older than seven months, according to the present invention.
FIG. 16 illustrates the protection policy management interface shown in FIG. 14 having a "keep only the latest version" option selected.
FIG. 17a illustrates the protection policy management interface shown in FIG. 14 having a "purge on delete" option selected.
FIG. 17b illustrates an exemplary effect of selecting the "purge on delete" option shown in FIG. 17a, according to the present invention.

FIG. 18 illustrates an exemplary embodiment of automatic capacity balancing between protection servers over time through migration of version chains from protection servers that have less available disk storage space to protection servers that have more available disk storage space, according to the present invention.

FIG. 19 illustrates an exemplary embodiment of a two-tiered storage for storing a version chain that represents the entire protection history of a file, according to the present invention.

FIG. 20 illustrates an exemplary browser interface that indicate redundant file storage across multiple protection serves within each of two protection repositories, according to the present invention.

FIG. 21 illustrates an exemplary timeline of events associated with renaming a file and creation of a new version chain in connection with the renaming, according to the present invention.

FIG. 22 illustrates an exemplary timeline of events associated with deleting a file at a particular time and creation of a finalized version chain in connection with the deletion, according to the present invention.

FIG. 23 illustrates an exemplary browser interface showing a deleted file, according to the present invention.

DETAILED DESCRIPTION OF THE DRAWINGS

For a better understanding of the present invention, reference is made to the following description and accompanying drawings, while the scope of the invention is set forth in the appended claims.

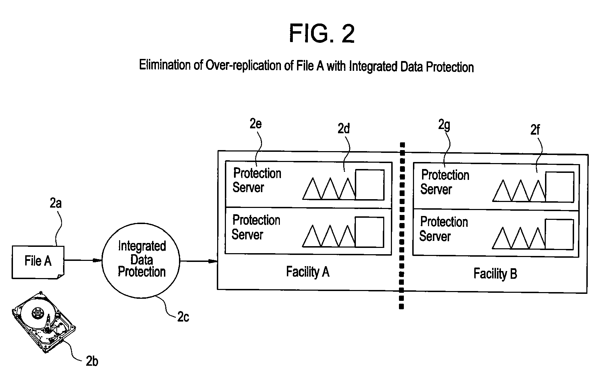

FIG. 2 illustrates an integrated data protection application 2c of the present invention. The data protection application 2c unifies protection capabilities of a backup, archiving, HSM and replication into a single data protection application. In an embodiment, file A 2a resides on a primary disk storage 2b and is protected in four separate version chains 2d and 2f (version chains 2d are stored onsite at the storage facility A; version chains 2f are stored offsite at the storage facility B). Each version chain resides in its own onsite or offsite protection servers 2e, 2g. The integrated data protection application 2c and the protection server 2e, 2g provide high-availability data protection onsite and offsite with a minimal number of replicas. This integrated approach reduces the number of data replicas from approximately thirty times to just four times. The two offsite version chains 2f that are stored in offsite protection servers 2g replace the traditional transportation and storage of tapes to an offsite tape storage warehouse. In addition, the offsite version chains 2f enable recovery from a site disaster at the onsite location.

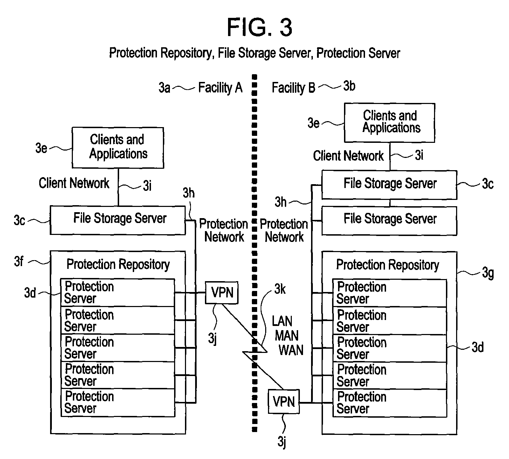

FIG. 3 is an exemplary embodiment of an integrated data protection apparatus deployed at storage facilities A and B (referred to as 3a and 3b, respectively) in accordance with the present invention. The two facilities A and B shown throughout the figures may be similar to each other. The data protection apparatus is deployed at two facilities to provide recoverability in the event of a site disaster (e.g. fire, natural disaster, terrorist act) at either facility 3a, 3b.

The data protection apparatus at each facility includes at least one file storage server 3c coupled via protection network 3h to a protection repository consisting of three or more protection servers 3d. The file storage server 3c, in turn, is coupled via client network 3i to clients and applications 3e. In an embodiment, the file storage server 3c provides network attached storage ("NAS") to clients and applications 3e. The file storage server 3c includes a central processing unit ("CPU"), memory, Ethernet networking and high performance Redundant Array of Inexpensive Disks 5 Small Computer System Interface ("RAID5 SCSI") disk data storage/digital storage device. Clients can store data files onto the file storage server through standard NAS protocols like Common Internet File System ("CIFS"), Network File System ("NFS") and File Transfer Protocol ("FTP"). The files can be stored on a tape, digital storage device, or other types of storage devices. Those skilled in the art will recognize that the above configurations are merely exemplary and different configurations may be employed without departing from the scope of the invention.

The files stored on the file storage server 3c are stored/protected periodically in both protection repositories 3f and 3g. The file storage server in facility A has its data stored/protected in the protection repositories 3f in facility A and 3g in facility B. The two file storage servers 3d in facility B have their data stored/protected in the protection repositories 3g in facility B and 3f in facility A.

Protection repositories 3f, 3g are made up of a collection of three or more protection servers 3d. In an embodiment, each protection server 3d includes a CPU, memory, Ethernet networking and one or more terabytes of lower-performance, lower-cost Serial Advanced Technology Attachment ("SATA") disk data storage capacity. This data storage capacity from each protection server is aggregated to create a larger multi-terabyte pool of repository disk storage capacity.

In an alternate embodiment, the present invention includes two protection repositories 3f (facility A) and 3g (facility B). Within a facility, all of the file storage servers 3c and the protection servers 3d are connected by a protection network 3h, which is based on a standard gigabit Ethernet networking. Those skilled in the art will recognize that other protocols may be employed. The protection network 3h is isolated from the client network 3i to allow clients to access the file storage servers 3c without being impeded by the traffic between file storage servers 3c and the protection servers 3d.

The protection networks 3h at each facility are connected together with a standard Internet Protocol ("IP") based local, metro or wide area networks 3k. When files of data are transmitted from one facility to the other, virtual private networks ("VPN") 3j at each site encrypt and decrypt all files as they are transmitted across a wide area network ("WAN"). As can be understood by one having ordinary skill in the art, the transmissions can take place across a local area network ("LAN"), a metropolitan area network ("MAN"), or any other type of network, and these networks may be wireline or wireless. This provides an increased security for backup data that has traditionally been put onto dozens of magnetic tapes and trucked to offsite storage warehouses.

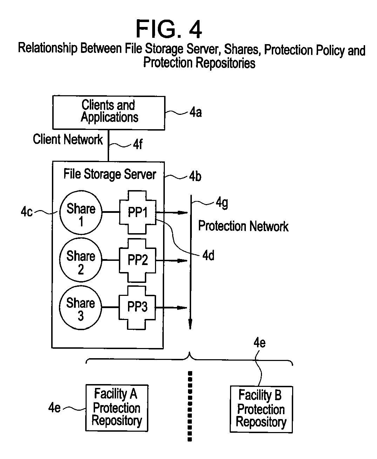

FIG. 4 illustrates a relationship between clients and applications 4a, file storage servers 4b, shares 4c, protection policies 4d and protection repositories 4e. In an embodiment, the file storage server 4b is a computer that contains a CPU, memory, an interface to a network and a disk storage system. Logically, the disk storage system is seen by clients and applications 4a as one or more NAS shares 4c of storage capacity. Individual shares can be created to organize groups of files by project or by department, for example. Clients and applications 4a access shares 4c physically across a client network 4f and logically through industry standard NAS protocols like CIFS and NFS.

The protection repositories 4e within each facility are disk-based pools of storage capacity that replace traditional magnetic tapes, magnetic tape drives and jukeboxes for data backups and long-term archiving. All of the files created or modified on the file storage server 4b are periodically backed up into the protection repositories 4e at both facilities through the protection network 4g.

The definitions of how each share's files are stored in the repositories 4e is maintained in a protection policy 4d (PP1, PP2, or PP3). A protection policy 4d defines how often its files are stored into the repositories 4e at both facilities. Share files that have been created or updated within a share can be protected as often as once an hour and as infrequently as once a day. As can be understood by one having ordinary skill in the art, other time periods for creating and updating share files are possible.

The entire history of the changes to each share's files is retained in the repositories 4e. The protection policy 4d also defines how much of the share's file history should be maintained within these repositories.

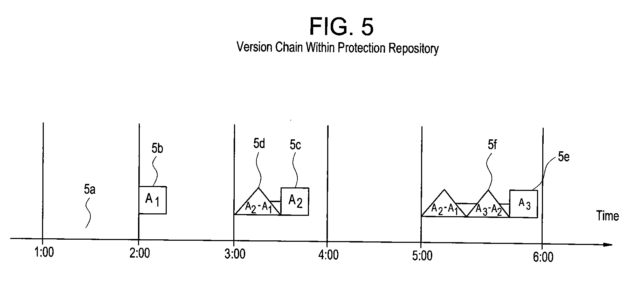

FIG. 5 illustrates an exemplary file history of version chain structure of a file A. File A's history indicates that after creation, the file A was modified two times. A1 represents the initial version of file A. A2 represents the version of file A that was stored after it was modified once. A3 represents the version of file A that was stored after it was modified a second time.

In an embodiment, a protection policy for the share storing file A on the file storage server is configured to perform hourly backups of new and modified share files into the repository. After 1:00 and before 2:00, file A is created by a client or an application on a file server within a share. Since the 2:00 backup has not taken place, there is no instance of backup data for file A in the repository 5a. At 2:00, file A is stored (as indicated by a reference 5b) into the repository as A1. Since this is the first version of the file, a new version chain comprised of just the entire file A within the repository is created.

At some point after 2:00 and before 3:00, file A was updated on the file storage server by a client or an application. At 3:00, the copy of the updated version of file A is sent to the protection repository. Because the protection repository is made up of multiple protection servers, each with CPU processing power, the new version of the file can be processed in such a way as to reduce the amount of capacity that it and its earlier versions of the file will consume within a protection server of the protection repository.

This backup data is stored in such as way as to maintain the latest version (called A2) in its entirety and replacing the file A1 with just the byte level difference between A2 and A1. With byte level differencing, every earlier version of a file is reduced to a size that is hundreds to thousands times smaller than the current version of the file. Conventional weekly full and nightly incremental backups cannot possibly compress successive versions of files in this manner since they reside typically on separate tape media.

The latest version of a file is stored in its entirety for the following reasons:

1. Storing A1 as just the byte-level difference (delta) between A2 and A1 saves significant amounts of protection server storage capacity.
2. The latest version of a file is typically what gets requested as part of a restore operation when an application or a client accidentally deletes a file from the file storage server. Retaining the latest copy in an unmodified form in the protection repository minimizes the time it takes to complete the restore task.
3. The present invention may also support a hierarchical storage management scheme. According to this scheme, inactive or less often used data (as compared to other data or otherwise) on the file storage server is replaced with a much smaller "stub" file that points to the "backup" version of the file within the repositories. In the event a request is made for an inactive file by the client or application, the latest version of the file is recalled from the repository to the file storage server since it does not require processing as compared to the requests for earlier versions. The less often used data can be a least actively used data. This can be determined based on the time that the data was last used, accessed, changed, or otherwise. As can be understood by one having skill in the art, other methods of determining when the data was last used are possible.
4. If an earlier version of the file is requested, it can be recreated using the CPU processing capability of the protection server as follows:

$$A1 = A2 - (A2 - A1)$$

Referring to FIG. 5, between 3:00 and 4:00, no changes are made to file A on the file storage server. In this case, the version chain in the repository is not updated in any way. In an embodiment, only files that are created or changed consume additional repository space. Sometime between the hours of 4:00 and 5:00, the file A was modified again on the file storage server. During the backup at 5:00, a new version A3 5e of the file is stored in the repository and the file A2 is replaced by the difference 5f between A3 and A2.

As files are updated and modified over time, the length of the version chain continues to grow. In an embodiment, only the latest version of the file is stored in its entirety and all other versions are stored as byte level differences.

If at 6:00, a request is made to recover A1 from the repository, it would be computed as follows:

$$A1 = A3 - (A3 - A2) - (A2 - A1)$$

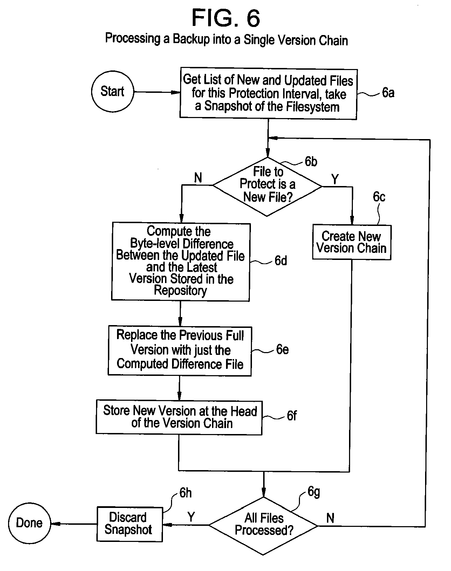

FIG. 6 is a flowchart illustrating a method for protecting new and updated files during a backup interval, according to the present invention. At the start of the backup of a file storage server share, a list of all new and modified files is created by the file storage server (step 6a). At or about this same time, a snapshot of the file storage server file system is taken (step 6a). The snapshot creates a frozen image of the state of the file system at that backup interval. For each file that is processed as part of the backup (as shown in the decision step 6b), either a new version chain is created for new files (step 6c) or existing version chains are extended for files in the file server storage share that are modified (steps 6d-6f). In step 6d, a byte-level difference between the updated file and the latest version stored in the repository is computed. Once the difference is computed, the previous full version of the file is replaced with the computed byte-level difference file, as shown in step 6e. The new version is stored at the head of the file version chain, as indicated in step 6f. Once all files are processed as part of the backup process (step 6g), the snapshot may be discarded so as not to take up unnecessary storage capacity on the file storage server (step 6h). If not all files are processed, the method goes back to step 6b, described above.

The method in FIG. 6 is advantageous over the conventional snapshot protection systems at least for the following reasons:

1. In the conventional protection system, snapshots can protect data for up to N snapshot intervals, typically 64 or 256 intervals. This can represent the limited time span of weeks of file system history. The present invention allows the file history to be stored for as long as necessary.

2. Conventionally, maintaining 64 to 256 snapshots can consume as much as 40% of primary disk storage capacity. According to the present invention, snapshots are used to get a consistent image that can then be backed up into the protection repository onto lower cost disk storage than the file storage system's disk storage.

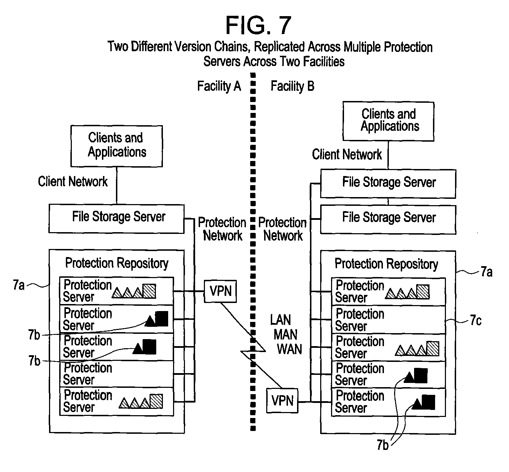

FIG. 7 illustrates version chain replication scheme within each protection repository 7a, according to the present invention. This provides quadruple protection of every version of every client or application file. The solid black version chains 7b represent the replicated protection of one file. The hashed version chains represent the replicated protection of a second file. Each protection repository may retain millions of these replicated version chains.

The protection repository is made up of protection servers 7c. In an embodiment, each protection server contains a power supply, a CPU, main memory, at least one network port, and multiple magnetic disk drives for storing version chains. An entire version chain is stored within a single protection server and is not split across protection servers. By storing two version chains across two independent protection servers, high availability is achieved. While each protection server has many single points of potential failure, two protection servers provide high availability because, together, they provide redundant power, redundant processors, redundant memory, redundant networking and redundant disk storage.

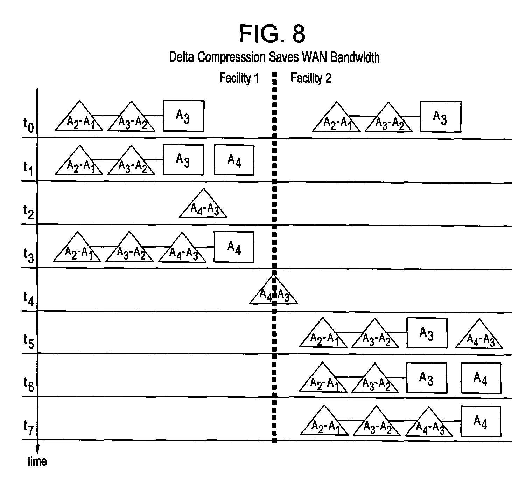

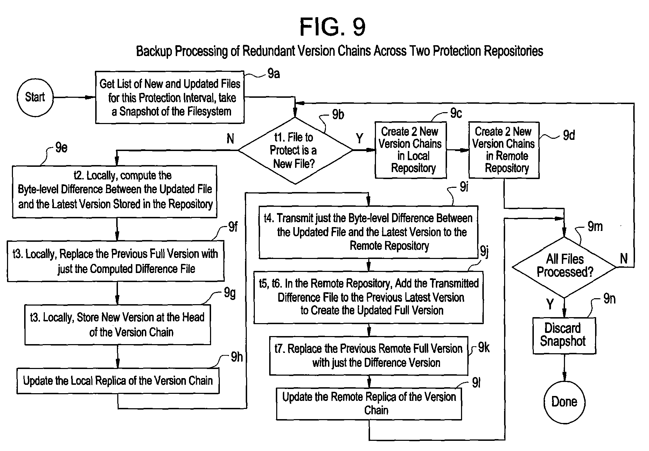

FIG. 9 is a flowchart illustrating a method for updating a version chain of a file both locally and remotely. FIG. 8 illustrates the flowchart as a timeline. The flowchart references to t# (# = 1, 2 ..., 7): refer to the times in FIG. 8. In an embodiment, the method described in FIGS. 8 and 9 replaces conventional creation of duplicate backup tapes, where one set of tapes is sent off to an offsite tape storage facility. Since, FIGS. 8 and 9 described the same process, they are discussed together below.

Referring to FIGS. 8 and 9, the above referenced method begins at time t0, as indicated in step 9a. A list of new and updated files is obtained for the protection/storage interval and a snapshot of the file system is taken. The facilities 1 and 2 (shown in FIG. 8) have two version chains for file A (only one shown per facility in FIG. 8). In this example, file A was created and then modified twice on the file storage server to create a version chain with three members.

At time t1 (step 9b), a decision is made whether the file A is a new file. If it is a new file, the processing proceeds to steps 9c and 9d. In step 9c, two new version chains for file A are created in a local repository. Likewise, two new version chains for file A are created in remote repository, as indicated in step 9d. If file A is not a new file, then processing proceeds to step 9e. File A is stored in the protection repositories in both facilities A and B. This new version of file A, called A4, is stored in the same protection servers that the previous versions were stored in.

At time t2, a byte level difference between A4 (latest version) and A3 (updated file) is computed, as indicated by step 9e. This step is performed within the protection servers at a local repository.

At time t3, the byte level difference between A4 and A3 replaces A3, as indicated in step 9f. The new version A4 of the file A is stored at the head of the version chain and followed by the byte level difference between A4 and A3, as indicated by step 9g. At this point, one of the protection servers within facility 1 has a completely updated version chain. The other protection server at facility 1 that holds the replica of the version chain for file A is updated in the same way, as shown in step 9h. The steps 9f-9g are also performed at the local repository.

At time t4, the byte level difference that was already computed in the repository in facility 1 is used to update the remote site at facility 2 as well (as shown in FIG. 8). Instead of having to send the entire file A4 across a wide area network between facilities, only the byte level difference is transferred, as indicated in step 9i. Such transmission reduces file transfer times from hours or days to just seconds or minutes, depending on how effective the byte level differencing was in the repository in facility A. It also provides increased security since the entire file is not being transferred, just the parts that have been modified.

At time t5, the byte level difference file, represented as A4-A3 arrives at facility 2 (See, FIG. 8). Then, at time t6, the file A4 is created at facility 2 by taking A3 and "adding" the byte level difference to A3 according to the following:

$$A4 = A3 + (A4 - A3)$$

This is indicated by step 9j in FIG. 9.

At time t7, in facility 2, the file A3 is replaced by the byte level difference file, A4-A3. Once this version chain is duplicated to a second protection server at facility B, the backup of file A4 is complete at both facilities, as indicated by steps 9k-91. Once it is decided that all files are processed (step 9m), the snapshot created in step 9a is discarded (step 9n). If not, the process goes back to step 9b and repeats steps 9b-91.

Because the present invention has a computing power to process the above backup data in parallel, a significant amount of repository space and WAN bandwidth are conserved.

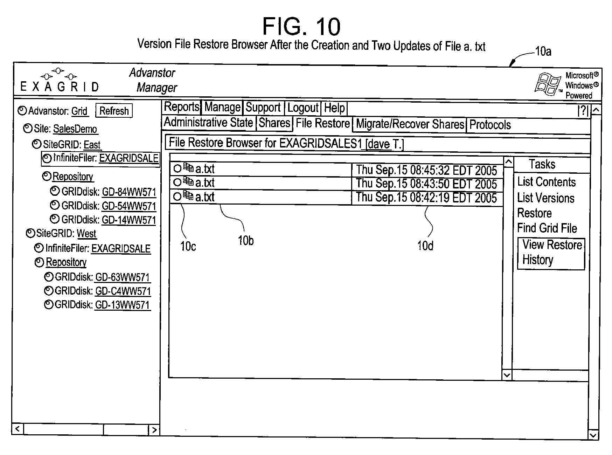

FIG. 10 illustrates an exemplary embodiment of a web-browser user interface 10a that an administrator uses to view the version chain of a single file. Even though all version chains for a single file are replicated on two protection servers at each storage facility (See, FIGS. 7-9), the user interface 10a may present the file history of either of the version chains 10b, since they are identical. From the interface 10a, the administrator selects a file called "a.txt" for restoring. This might be performed if the file a.txt has been accidentally deleted from the file storage server or it became corrupted, etc. The administrator can select, as shown by the reference 10c, any one of the three versions that are being maintained in version chains. The last modified date/timestamp 10d helps the administrator understand when these files were backed up and/or changed. In this example, the file a.txt is backed up multiple times within a few minutes. As can be seen from the last modified timestamp 10d, the top version represents the latest version of the file. The latest version of the file is stored within the repository in its entirety, so restoring it does not require any additional processing other than copying the file to the requested destination. If the user requested the restoration of the earliest version of this file, the entire version chain would be processed from the most recent version backward to produce the first version.

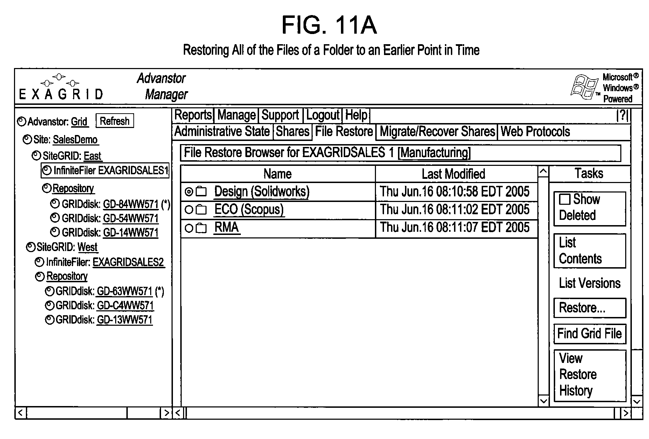

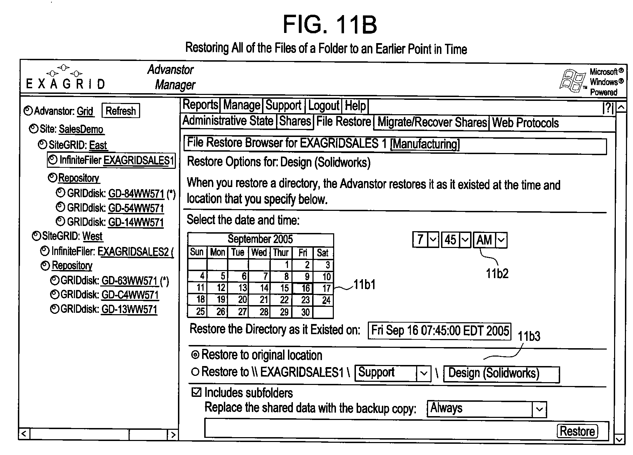

FIG. 11a and FIG. 11b illustrate an exemplary embodiment of two user interface screens that allow an administrator to restore the entire collection of files within any directory level of a hierarchical directory/file tree to an earlier date and time. In FIG. 11a, an entire directory has been requested for restoration. Once a directory is selected for restoration using the interface in FIG. 11a, the user interface displays the second screen (FIG. 11b) where the specific date and time to which the data should be restored is selected by the administrator. Using the calendar 11b1 and time selection criteria 11b2, any point in time earlier than the present can be selected. By default, the default date and time reflects the date and time of the last completed backup of data into the protection repository for the requested directory. Although, those skilled in the art will recognize that this is merely a design choice and other default options could be employed. The data that is restored can either be restored to the original location or to an alternate location based on the administrator's choice 11b3.

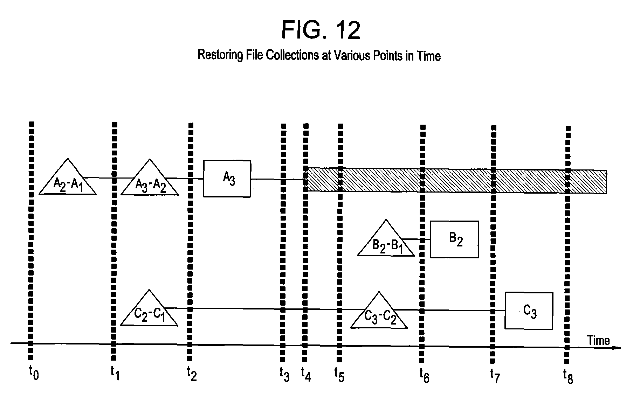

FIG. 12 illustrates an exemplary timeline of events for processing a request for a collection of files from an earlier point in time, according to the present invention. In the embodiment shown, the current time is t8. Three files, A, B, and C, have existed within the same directory during the period from time t0 to time t8, but at time t4, file A was deleted. The following is a detailed description of a sequence of events which may have occurred in an attempt to restore data between times t0 and t8:

- At time t0, none of the three files existed, so if a request were made to restore at that point in time, the restore would succeed, but no files would actually be restored to the destination location.
- At time t1, the first version of file A (called A1) was available, but files B and C were not created yet. If the request was made to restore data to time t1, the A1 version of file A would be restored by working backward from the latest version of A (called A3) until A1 was computed as:

$$A1 = A3 - (A3 - A2) - (A2 - A1).$$

• At time t2, the second version of file A (called A2) was available as was the first version of file C (called C1). If the request was made to restore data to time t2, the A2 version of file A would be restored by working backward from the latest version of A (called A3) until A2 was computed as:

$$A2 = A3 - (A3 - A2).$$

In addition, the first version of file C can be computed from:

$$C1 = C3 - (C3 - C2) - (C2 - C1).$$

• At time t3, the latest version of file A (called A3) was available, and the first version of file C (called C1) was available so these would be restored if the restore time was set to t3. File B has not been created yet, so it is not restored.
• At time t4, file A was deleted from the file storage server. Files that are deleted from the file storage server are not deleted from the protection repositories, because these repositories represent the source of backup data. Even though file A is not accessible to clients and applications of the file storage server directly, if file A was requested for restore, it could be restored through the administrative interface as either a single file or as a collection of files.
• At time t5, only the first version of file C was present since file A was deleted at time t4. When a request is made to restore the directory with these files to the point in time denoted as t5, only the first version of file C (called C1) will be restored since file A was deleted from the file storage server at time t4. If it is important to restore any version of file A, this can be performed using the "single file" restore user interface described in FIG. 10 above.
• At time t6, the first version of file B (called B1) was present as well as the second version of file C (called C2). These versions are restored by working backward from the latest version.
• At time t7, the second version of file B (called B2) and the second version of file C (called C2) are present on the file storage server, so a restore request at that point in time returns these versions to the specified restore destination.
• At time t8, the second version of file B (called B2) and the third version of file C (called C3) are present on the file storage server, so a restore request at that point in time returns these versions to the specified restore destination.

In this example, the invention's version chain implementation enables restoration of file collections for a particular point in time.

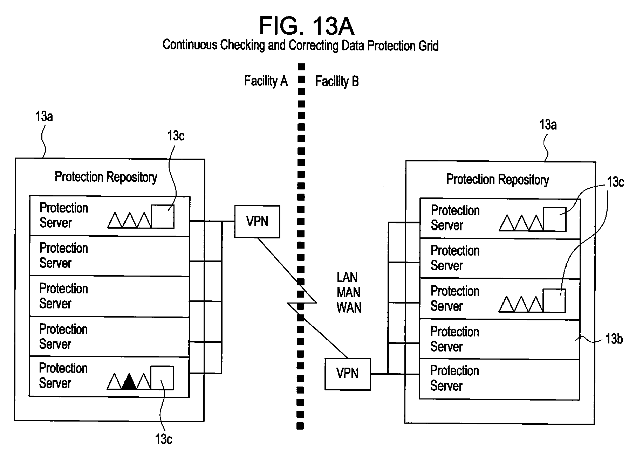

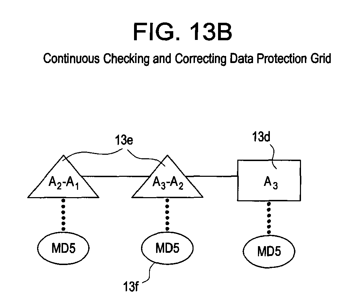

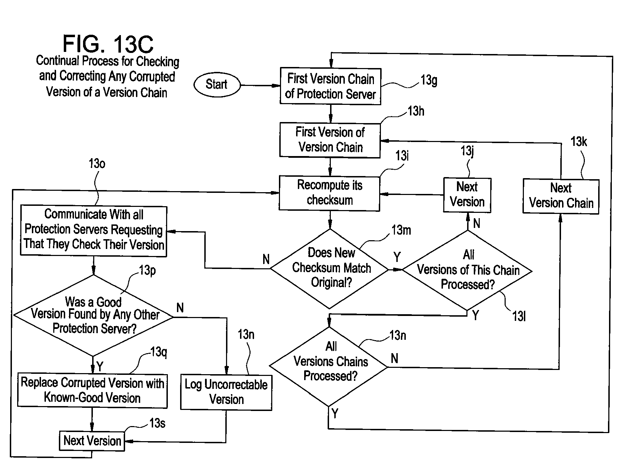

FIG. 13a, FIG. 13b, and FIG. 13c illustrate how the data within each version of a version chain is checked and corrected on a continual basis within each protection server of a protection repository. Backup and long-term archiving functions have traditionally relied on magnetic tape as a storage medium. With tape-based data protection, it is not realistically feasible to check every backup and archive tape that was ever written in order to locate tapes that have become damaged or corrupt over time. It would take many hours to read and verify the content of each of these tapes and many IT organizations have accumulated hundreds of backup tapes over many months and thousands of archive tapes over many years. The verification of tapes is also a destructive process for both the tape media and the tape drive's read/write heads. Finally, even if tapes were regularly monitored in this manner, tape media errors could be detected, but could not be corrected.

The present invention allows all backup data that is stored in its protection repositories at each of two facilities to be continually checked and corrected. FIG. 13a shows two facilities, each with a protection repository 13a. Each protection repository is made up of three or more protection servers 13b. Each version chain 13c maintains the entire change history of a single file over time. Each version chain is replicated and stored on two protection servers within each facility, making a total of four replicas 13c.

In FIG. 13b, the version chain is made up of a series of version files. The most recent version of the file 13d is maintained in its entirety and all earlier versions 13e are retained as just the difference between successive versions. When each version file of a version chain is created and stored into a protection server, a Message Digest 5 ("MD5") checksum is also computed for that version and stored as a checksum file 13f as part of the version chain in the protection server.

The present invention's grid-based architecture allows it to scale to support protection repositories with very high aggregate processing and storage capacity. Each protection server provides disk storage capacity to retain version chains as well as the processing power to continually check and correct version chains that have become corrupted over time. All of the protection servers within the protection repository at the local and offsite facility can each be performing version chain checking and correction tasks independently and/or in parallel. Because of this parallelism, tens of terabytes of version chain files that are distributed across tens of protection servers can be checked and corrected in the same amount of time it would take for just a single protection server to check all of its versions.

FIG. 13c illustrates a method, performed by each protection server, for continually processing version chains, looking for corrupted files and replacing these corrupted files with known-good files from other protection servers. The version chain structure enables this checking and correcting process.

To continually check and correct the version chains, a first version chain of protection server is reviewed, as indicated in step 13g. A determination is made with respect to which is the first version of a file in the received version chain, as indicated in step 13h. A checksum, such as a MD5 checksum, is computed for that first version, as indicated in step 13i. Then, the processing proceeds to make a determination as to whether the computer checksum matches the original checksum (step 13m). If it does, then a determination is made whether all versions in the received version chain have been processed (step 13l). If not, then the next version is determined (step 13j), and the processing proceeds to step 13i, described above. If all versions have been processed, then the processing determines if all version chains have been processed (step 13n). If yes, then the processing proceeds to step 13g, where a new first version chain is received. If not, then processing proceeds to step 13k, where a next version chain is obtained for checking and correcting. After step 13k, the processing proceeds to step 13h, described above.

If in step 13m, the computed checksum does not match the original checksum, then the processing proceeds to step 13o. In step 13o, all protection servers are requested to check the versions that are stored on them. Then, the processing determines if a good version was found on one of the protection servers (step 13p). If not, then a log entry of an uncorrectable version is created, as indicated in step 13r. The processing then proceeds to step 13s, where a next version is obtained so that its checksum can be computed in step 13i, as described above.

If a good version was found in step 13p, the processing proceeds to step 13q, where the corrupted version is replaced with a known-good version that was obtained from one of the other protection servers. Then, the processing proceeds to step 13s, described above.

All data files have an ideal lifecycle, defined as the period of time between creation and eventual purging or destruction. In an embodiment, one application may define the retention of data files to be 20 days, at which point, files can and should be deleted from the data storage system. Another application may require the reliable retention of data for 17 years at which point, files that have been retained in excess of this period can and should be deleted.

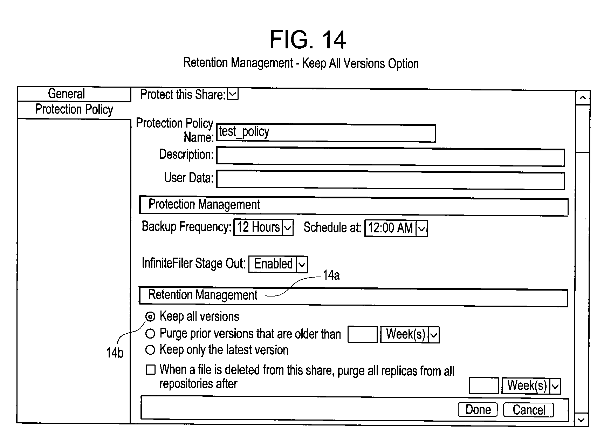

FIG. 14 illustrates an exemplary protection policy web-based interface that allows an administrator to specify the retention management 14a to apply to all files and their versions created within a share of the file storage server. These retention management options allow the administrator to define if and when versions within a version chain should be purged from all repositories. These retention management policy options apply to all version files stored in the protection repository related to a specific share of the file storage server. Those skilled will recognize that different shares could be set up for different retention times.

FIG. 14 also illustrates that the "Keep all versions" option 14b is selected in the protection policy of the management interface. With this option selected, all version files within a version chain will be retained in the repositories for an indefinite period. This is the default option.

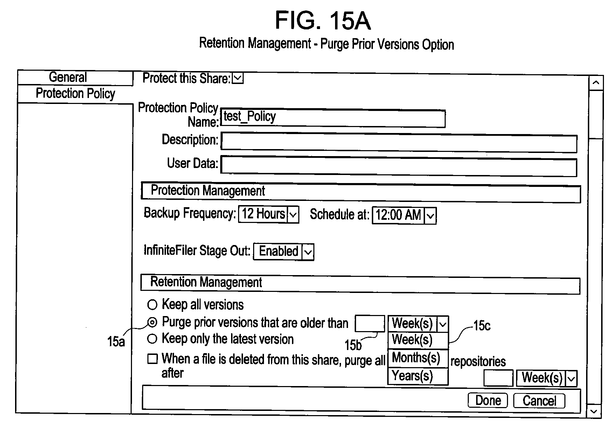

FIG. 15a illustrates the retention management user interface of FIG. 14 above, which can be used for purging prior versions of a file. In this case, the "Purge prior versions that are older than ..." option 15a is selected as a retention management option. This option will cause each protection server to periodically delete version files that are older than a number of (as indicated by a box 15b) days, weeks or months (indicated by a pull down menu 15c). The most recent version of a file is not purged with this option, only prior versions. This retention management option allows older versions to be automatically purged from the repositories, a task that is difficult to perform with existing tape-based backup and archiving solutions.

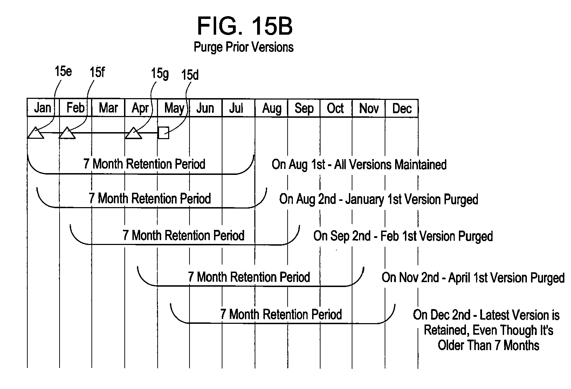

FIG. 15b illustrates how prior versions are purged over time. In this embodiment, the following is assumed:

1. The retention policy is set to "Purge prior versions that are older than 7 months".

2. Current month is June and a version chain has the latest version of the file 15d created in May in addition to three earlier versions: one created on January 1st (indicated by 15e), one created on February 1st (indicated by 15f), and one created on April 1st (indicated by 15g).

3. The files are modified midday on the 1 st of these months.

4. As time advances from June, an automatic determination is made as to which prior versions of this file 15d to purge from the two local as well as the two remote protection servers that are responsible for maintaining this version chain.

5. On August 1st, all versions of the version chain are maintained since the oldest version is not yet more than seven months old.

6. On August 2nd, the first version 15e of the version chain is deleted from the two local and two remote protection servers. Each of the four protection servers carries out this purge operation on its own. All storage capacity that is made available by the delete operation is made available to new backup data.

7. On September 2nd, the second version 15f of the version chain is deleted from the two local and two remote protection servers.

8. On November 2nd, the third version 15g of the version chain is deleted from the two local and two remote protection servers. The only remaining version in the version chain is the most recent version.

9. On December 2nd, the most recent version 15d of the version chain is now older than seven months, but since it's the most recent version of the file, and this policy only deletes "prior" versions, this most recent is version retained in each of the four protection servers.

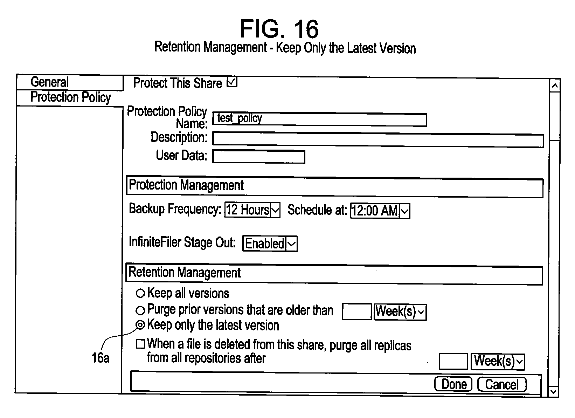

FIG. 16 illustrates a retention management user interface of FIG. 14 having a "Keep only the latest version" option 16a selected in the retention management section of the protection policy. Each time a file is modified within the file storage server and is protected within multiple protection servers, the prior version of that file within each of the protection servers is automatically deleted. This option makes sense for environments where clients and applications would never request the restoration of a version of a file older than the latest version.

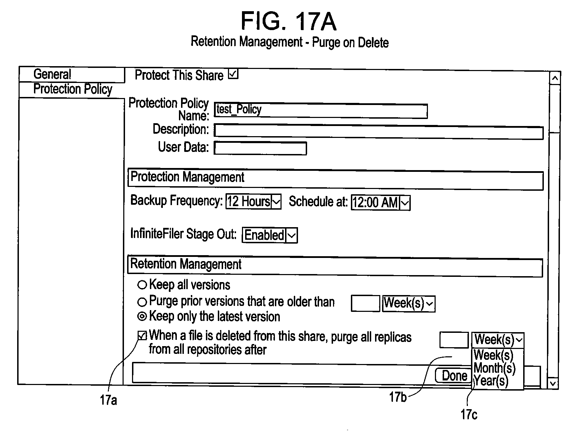

FIG. 17a illustrates a selection of a retention management option (checkbox 17a) called "when a file is deleted from this share, purge all replicas from all repositories after N (indicated by box 17b) week(s), month (s), or year(s) (indicated by pull down menu 17c). this can be referred to as "purge on delete" option.

By selecting the purge on delete option, anytime a file is deleted from a file storage server, all replicas and all versions within the 4 version chains of that file are also deleted (purged) from the 4 protection servers, effectively eliminating not only the primary copy of the file, but also its entire backup history. By default, this "purge on delete" option is not selected, since selecting it would eliminate the possibility of restoring a file when it is accidentally deleted from a file storage server by a user.

The purge on delete option is enabled if an external application like a backup, document management, records management or archiving application is responsible for managing the retention of their files. For instance, a records management application can specify that certain email messages that include a keyword "ABC" must be retained for 7 years. After 7 years, the records management application issues a delete request to the file storage server to delete all files that are older than 7 years that have the keyword "ABC". The records management application ideally wants every copy ever created to be eliminated on a delete request. With this invention, this request for eliminating all copies of these files can be completely satisfied.

When the "purge on delete" option is selected, the replicated version chain files in the four protection servers are not immediately purged. They are purged N weeks, months or years after the file is deleted from the file storage server, as specified by the administrator in the retention policy.

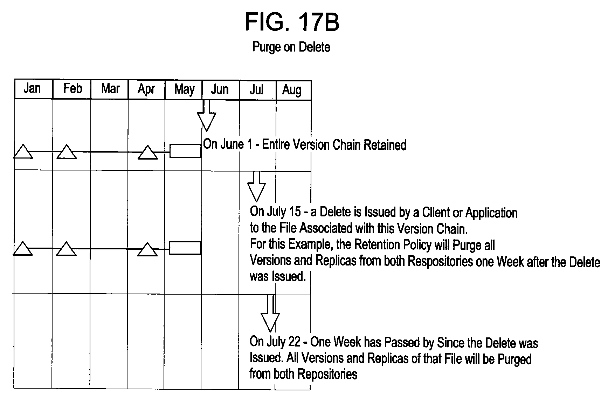

FIG. 17b illustrates an exemplary effect of the "purge on delete" option. In this embodiment, the retention option is set to purge all four replicas of version chains in all four protection servers one week after a file has been deleted. Thus:

1. On June 1st, a version chain with four versions is being maintained in four protection servers;
2. On July 15th, a file is deleted from the file storage server; and
3. On July 22nd, all replicas and versions of the deleted file are purged from all four protection servers.

Purging can be done manually, automatically, periodically, on a preset schedule, or otherwise. As can be understood by one having ordinary skill in the art, the above are merely examples and other configurations are possible without departing from scope and spirit of the invention.

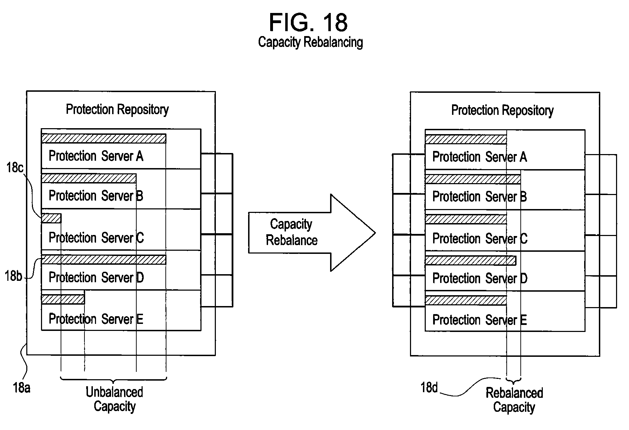

FIG. 18 shows how protection servers are automatically capacity balanced over time to allow version chains to be continually extended. Each protection server has a finite amount of disk storage capacity, for example one terabyte.

When files are written to one of the many protection servers as part of the invention's continual backup process, some optimization rules may be employed:

1. A modified file will be maintained in the same protection server as all of the other versions of the existing version chain. This allows all operations that are related to the management of a single version chain can be performed by a single protection server. If version chains were split across two or more protection servers, the processing of version chains would also induce undue network traffic and delays.
2. A new file will be placed into the protection server with the most available capacity. This allows the new version chain to be expanded over time with a higher probability that more space will be available for new versions.

With this placement model, any protection server could run out of available storage capacity as new or modified files are being added to the version chains within the protection servers. As a protection server approaches the limits of available disk space, an automatic rebalance operation is initiated among all data protection servers within a protection repository 18a. Entire version chains are moved from protection servers that are full 18b to protection servers that have the most available disk storage capacity 18c. By moving version chains among protection servers, the capacity of each protection server remains at approximately the same consumed and available capacity 18d. Because each protection server has processing power, rebalance operations can be performed among multiple protection servers in parallel to increase the speed of the overall rebalance operation.

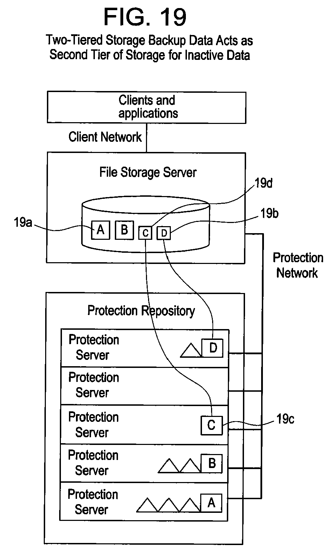

FIG. 19 shows how a version chain not only represents the entire protection history of a file, but also its latest version acts as a second tier of storage to the file storage system. The present invention also performs auto-migration of inactive data between the more costly file storage server tier and the lower cost protection server tier. Active files are maintained in their entirety 19a on the file storage server, but files that are inactive are replaced with a much smaller 4KB "stub" file 19b on the file storage server. Traditional backup and hierarchical storage software applications create both backup tapes and HSM tapes, and effectively write many of the same files to multiple tape sets. The present invention is more highly integrated. For example, when file C was created on the file storage server, that file was replicated to two onsite and two offsite protection servers 19c within an hour of being created (in the diagram, only one version chain for each file on the file storage server is shown). Assume that file C was never read or modified from the time it was created. After some period of time, as the file storage server begins to run out of available storage capacity, inactive files like file C are replaced with a much smaller stub file 19d. The most recent version of file C in the version chain is transparently accessible when a user requests a file that has been stubbed out from a file storage system.

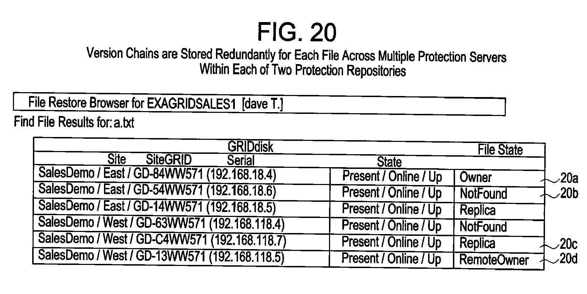

FIG. 20 illustrates an exemplary embodiment of redundant storage of files across multiple protection servers within each of two protection repositories. As above, the file a.txt is stored across four protection servers corresponding to two protection repositories. FIG. 20 indicates a file restore browser that indicates file a.txt is stored on the owner and replica protection server that correspond to a local protection repository, as indicated by references 20a and 20b. File a.txt is also stored on the remote and replica protection server that correspond to a remote protection repository, as indicated by references 20c and 20d.

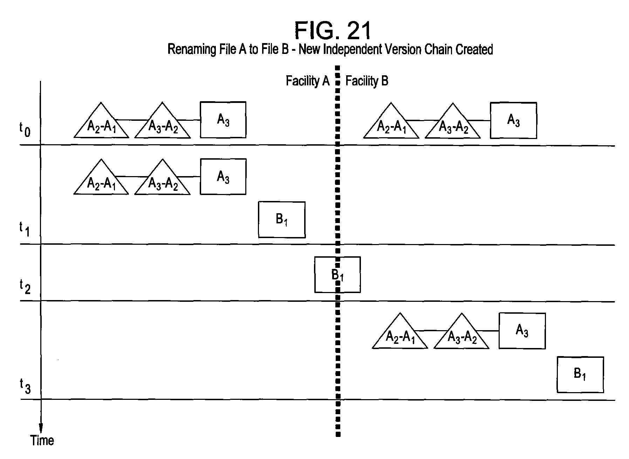

FIG. 21 illustrates an exemplary timeline of events corresponding to renaming file A to file B as well as a creation of a new independent version chain, according to the present invention. This process takes places during time interval t0 to t3. At time t0, a version chain for file A exists in facilities A and B. The most current version of file A is named A3. The version A3 is stored with two byte-level differences (A2-A1) and (A3-A2) in both facilities. This process was described above with respect to FIGS. 5, 8, and 12. At time t1, the file A is renamed to file B. Hence, a first version B1 of file B, replaces the latest version A3 of file A. At time t2, only the first version B1 is transferred from facility A to facility B. This is because the version A3 and corresponding byte-level differences for file A are already stored in facility B. At time t3, the transfer of first version B1 of file B is complete and the first version B1 is stored along with the version chain for file A, i.e., A3 and byte-level differences (A2-A1) and (A3-A2) as a version chain at facility B.

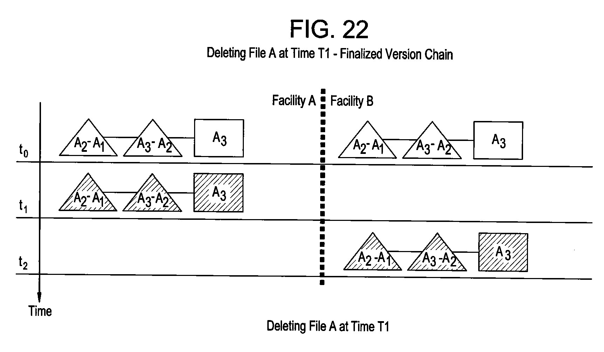

FIG. 22 illustrates an exemplary timeline of events corresponding to deleting file A at a specific time (e.g., time t1) and creating a finalized version chain, according to the present invention. The events occurs between time t0 and t2. At time t0, two version chains for the file A exist at both facilities A and B. Each version chain includes the latest version A3 of the file A and two byte-level differences (A2-A1) and (A3-A2). At time t1, file A is deleted along with the latest versions and the byte-level differences (shown in grey color in FIG. 22). At time t1, the file A is deleted in facility A. Thus, at time t2, the file A is deleted in facility B, thereby mirroring actions performed in connection with file A at facility A.

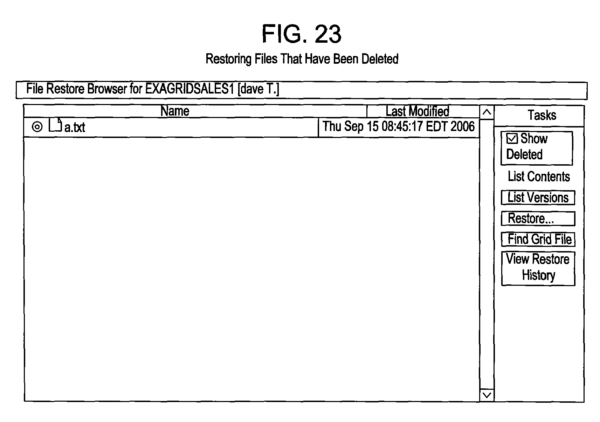

FIG. 23 illustrates an exemplary file restore browser screen indicating that file a.txt was deleted. The icon corresponding to the file a.txt is crossed out indicating that the file is deleted. In an embodiment, the restore browser does not display the file since it was deleted in the past and the deletion was noted in a previous backup. The browser can include a special restore option that allows deleted files that having been noted by a completed backup to be displayed and restored.

While the foregoing description and drawings represent the preferred embodiments of the present invention, it will be understood that various changes and modifications may be made without departing from the spirit and scope of the present invention.

**Claims**

1. A method for protecting data from loss comprising receiving a file;

    storing a modified version of said file and a difference file, wherein said difference file contains differences between said modified version of said file and said received file;

    replacing said modified version of said file with another modified version of said file; and

    storing another difference file in addition to said difference file, wherein said another difference file contains differences between said another modified version of said file and said first modified version of said file.

2. The method according to claim 1, wherein said file is received by a file storage server.

3. The method according to claim 2, wherein said storing said modified version, said replacing said modified version, and said storing said another difference file are performed using a protection server coupled to said file storage server.

4. The method according to claim 1, wherein said difference file and said another difference file form a history of said file.

**5.** The method according to claim 1, further comprising restoring said another modified version of said file using said file, said difference file and said another difference file.

**6.** The method according to claim 1, further comprising storing a duplicate of said another modified version of said file, said difference file, and said another difference file in a location which is different from a location of storage of said received file; wherein said storing further comprises storing said a duplicate of said modified version of said file and said difference file in said different storage location; transferring a copy of said another difference file from said storage location of said received file to said different storage location; storing said a duplicate of said another modified version of said file in said different storage location; and replacing said modified version of said file with said copy of said another difference file and said another modified version of said file in said different storage location.

**7.** The method according to claim 6, wherein said storing at least one duplicate copy is performed using at least one protection server.

**8.** The method according to claim 6, wherein at least one of said storage location and said different storage location is a magnetic tape.

**9.** The method according to claim 6, wherein at least one of said storage location and said different storage location is a digital storage device.

**10.** The method according to claim 6, wherein at least one of said storage location and said different storage location is a disk storage device.

**11.** The method according to claim 6, wherein said storage location and said different storage location are connected to each other using a network.

**12.** The method according to claim 11, wherein said network is selected from a group consisting of wide area network ("WAN"), local area network ("LAN"), metropolitan area network ("MAN"), and wireless network.

**13.** A method of organizing and managing data contained in files, wherein files are contained in folders organized into directories, comprising receiving and storing an original file on a file storage server; storing a copy of said original file in a protection repository; detecting a modification of said original file on said file storage server; replacing said copy of said original file in said repository with a copy of said modified version of said original file and a byte-level difference between said modified version of said original file and said original file; detecting another modification of said original file on said file storage server, wherein said another modification is a modification of said modified version of said original file; replacing said modified version with said another modification of said original file, and said byte-level difference, and storing an another byte-level difference in addition to said byte-level difference, wherein said another byte-level difference contains differences between said another modification of said original file and said modified version; and storing a duplicate of said another modification of said original file in another protection repository other than said protection repository, wherein said storing further comprises storing said another modification of said original file in said another protection repository; and transferring copies of said byte-level difference and said another byte-level difference to said another protection repository.

**14.** The method according to claim 13, wherein said file storage server is in communication with said protection repository.

**15.** The method according to claim 14, wherein said storing, said replacing, said replacing and storing are performed using at least one protection server contained within said protection repository; and said storing said duplicate is performed using at least one protection server contained within said another protection repository.

**16.** The method according to claim 13, further comprising:

retrieving said another modification of said original file using said original file, said byte-level difference, and said another byte-level difference.

**17.** The method according to claim 13, further comprising retrieving said modified version of said original file using said another modification of said original file and said another byte-level difference.

**18.** The method according to claim 13, further comprising retrieving said modified version of said original file using said another modification of said original file and said another byte-level difference.

**19.** The method according to claim 16, wherein said retrieving step is performed in said protection repository.

**20.** The method according to claim 17, wherein said retrieving step is performed in said protection repository.

**21.** The method according to claim 18, wherein said retrieving step is performed in said protection repository.

**22.** The method according to claim 16, wherein said retrieving step is performed in said another protection repository.

**23.** The method according to claim 17, wherein said retrieving step is performed in said another protection repository.

**24.** The method according to claim 18, wherein said retrieving step is performed in said another protection repository.

**25.** The method according to claim 13, wherein each of said protection repositories further comprises at least one protection server; and
said protection server includes a power supply, a central processing unit, a main memory, at least one network port, and at least one magnetic disk drive.

**26.** The method according to claim 25, wherein said byte-level difference and said another byte-level difference are sequentially stored in each said protection server.

**27.** A system for protecting data from loss, comprising:

a storage facility including
a file storage server configured to receive a file; and
a protection repository in communication with said file storage server, wherein said protection repository is configured to store a modified version of said file along with a difference file and to replace said modified version of said file with another modified version of said file and store another difference file in addition to said difference file;

wherein said difference file contains differences between said modified version of said file and said file;
wherein said another difference file contains differences between said another modified version of said file and said modified version of said file.

**28.** The system according to claim 27, wherein said protection repository is further configured to restore said another modified version of said file using said file, said difference file and said another difference file.

**29.** The system according to claim 27, further comprising another protection repository in communication with said protection repository and located in a different location than said protection repository, wherein said another protection repository is configured to receive copies of said difference file and said another difference file from said protection repository; and store at least one duplicate of said another modified version of said file, said difference file, and said another difference file.

**30.** The system according to claim 27, wherein each of said protection repositories comprises at least one protection server for storing said file, said modified version of said file and said difference file.

**31.** The system according to claim 30, wherein each said protection server comprises a power supply, a central processing unit, a main memory, at least one network port, at least one magnetic disk drive.

**32.** The system according to claim 29, wherein said protection repository communicates with said another protection repository using at least one virtual private network.

**33.** The system according to claim 32, wherein said difference file is transferred from said protection repository to said another protection repository using said at least one virtual private network.

**34.** The system according to claim 29, wherein said file storage server is configured to
locate at least one file, which is used less often than another file; and,
replace said at least one file with a stub file containing information about at least one storage location within one of said protection repository and said another protection repository where a backup of said less often used file is stored.

**35.** The system according to claim 34, wherein said less often used file is a least actively used file.

**36.** The system according to claim 34, wherein said protection repositories are further configured to
retrieve said at least one least actively used file from at least one of said protection repositories using said stub file.

**37.** The system according to claim 29, wherein said protection repositories are configured to have at least one file retention policy configured to
retain said another modified version of said file, said difference file and said another difference file in at least one of said protection repositories.

38. The system according to claim 29, wherein said protection repositories are configured to have at least one file retention policy configured to
retain said another modified version of said file in at least one of said protection repositories; and
delete said difference file and said another difference file from at least one of said protection repositories.

39. The system according to claim 29, wherein said protection repositories are configured to have at least one file retention policy configured to
retain said another modified version of said file in at least one of said protection repositories; and
purge said modified version of said filed from said at least one of said protection repositories.

40. The system according to claim 39, wherein said retention policy is further configured to
perform said purging after a predetermined period of time.

41. The system according to claim 40, wherein said purging is selected from a group consisting of periodic purging, manual purging, and automatic purging.

42. The system according to claim 40, wherein said purging further comprises
purging said deleted file, said first difference file and said second difference file from all protection repositories.

43. The system according to claim 29, wherein each of said protection repositories is configured to have at least one file retention policy configured to
delete at least one of said file, said modified version of said file, and said another modified version of said file from at least one of said protection repositories; and
purge at least one replica of said at least of said file, said modified version of said file, and said another modified version of said file from at least one other one of said protection repositories.

44. The system according to claim 43, wherein said purging is selected from a group consisting of periodic purging, manual purging, and automatic purging.

45. The system according to claim 43, wherein said purging further comprises
purging said replicas from all said protection repositories.

46. The system according to claim 29, wherein said protection repositories are configured to balance a storage capacity of each said protection repository, wherein said balancing comprises
determining that at least one protection server has reached a limit of storage capacity;
transferring data from said at least one protection server to at least another protection server having available capacity to accept said transfer;
wherein said protection servers are located within at least one said protection repositories.

## FIG. 1

Over-replication of File A by Independent Data Protection Applications

# FIG. 2

Elimination of Over-replication of File A with Integrated Data Protection

# FIG. 3

Protection Repository, File Storage Server, Protection Server

EP 1 796 002 A2

# FIG. 4

Relationship Between File Storage Server, Shares, Protection Policy and
Protection Repositories

Clients and
Applications — 4a

Client Network — 4f

File Storage Server — 4b

4c — Share 1 — PP1 — 4g

Protection Network

Share 2 — PP2 — 4d

Share 3 — PP3

4e

4e — Facility A Protection Repository

Facility B Protection Repository

EP 1 796 002 A2

# FIG. 5
Version Chain Within Protection Repository

EP 1 796 002 A2

# FIG. 6
Processing a Backup into a Single Version Chain

```
Start ──► Get List of New and Updated Files
          for this Protection Interval, take    ⌐ 6a
          a Snapshot of the Filesystem
```

```
                    6b
              File to
         N    Protect is a    Y
              New File?
```

Compute the
Byte-level Difference
Between the Updated File   ⌐ 6d
and the Latest
Version Stored in the
Repository

Create New   ⌐ 6c
Version Chain

Replace the Previous Full
Version with just the      ⌐ 6e
Computed Difference File

Store New Version at the Head  ⌐ 6f
of the Version Chain

```
                   6h              6g
Done ◄── Discard    Y   All Files    N
         Snapshot       Processed?
```

21

# FIG. 7

Two Different Version Chains, Replicated Across Multiple Protection
Servers Across Two Facilities

Facility A ┊ Facility B

FIG. 8

Delta Compresssion Saves WAN Bandwidth

# FIG. 9

Backup Processing of Redundant Version Chains Across Two Protection Repositories

# FIG. 10

Version File Restore Browser After the Creation and Two Updates of File a. txt

10a

| ⬦ ⬦ ⬦  E X A G R I D | *Advanstor Manager* | Microsoft® Windows® Powered |

| Reports | Manage | Support | Logout | Help | |?| |
| Administrative State | Shares | File Restore | Migrate/Recover Shares | Protocols |

⊙ Advanstor: Grid [ Refresh ]

⊙ Site: SalesDemo

  ⊙ SiteGRID: East

    ⊙ InfiniteFiler: EXAGRIDSALE

  ⊙ Repository

    ⊙ GRIDdisk: GD-84WW571

    ⊙ GRIDdisk: GD-54WW571

    ⊙ GRIDdisk: GD-14WW571

⊙ SiteGRID: West

  ⊙ InfiniteFiler: EXAGRIDSALE

  ⊙ Repository

    ⊙ GRIDdisk: GD-63WW571

    ⊙ GRIDdisk: GD-C4WW571

    ⊙ GRIDdisk: GD-13WW571

File Restore Browser for EXAGRIDSALES1 [dave T.]

| ○ a.txt | Thu Sep.15 08:45:32 EDT 2005 |
| ○ a.txt | Thu Sep.15 08:43:50 EDT 2005 |
| ○ a.txt | Thu Sep.15 08:42:19 EDT 2005 |

10c    10b        10d

**Tasks**

List Contents
List Versions
Restore
Find Grid File

View Restore History

EP 1 796 002 A2

# FIG. 11A

Restoring All of the Files of a Folder to an Earlier Point in Time

| E X A G R I D | *Advanstor Manager* | | Microsoft® Windows® ™ Powered |
|---|---|---|---|

Reports| Manage | Support | Logout | Help |  |?|

Administrative State | Shares | File Restore | Migrate/Recover Shares | Web Protocols

⊙ Advanstor: <u>Grid</u>  [ Refresh ]

⊘ Site: <u>SalesDemo</u>

  ⊘ SiteGRID: <u>East</u>

   | ⊘ InfiniteFiler EXAGRIDSALES1 |

  ⊘ <u>Repository</u>

   ⊘ GRIDdisk: <u>GD-84WW571</u> (*)

   ⊘ GRIDdisk: <u>GD-54WW571</u>

   ⊘ GRIDdisk: <u>GD-14WW571</u>

⊘ SiteGRID: <u>West</u>

  ⊘ InfiniteFiler: <u>EXAGRIDSALES2</u>

  ⊘ <u>Repository</u>

   ⊘ GRIDdisk: <u>GD-63WW571</u> (*)

   ⊘ GRIDdisk: <u>GD-C4WW571</u>

   ⊘ GRIDdisk: <u>GD-13WW571</u>

File Restore Browser for EXAGRIDSALES 1 [Manufacturing]

| Name | Last Modified | Tasks |
|---|---|---|
| ⊙ 🗀 <u>Design (Solidworks)</u> | Thu Jun.16 08:10:58 EDT 2005 | ☐ Show Deleted |
| ○ 🗀 <u>ECO (Scopus)</u> | Thu Jun.16 08:11:02 EDT 2005 | |
| ○ 🗀 <u>RMA</u> | Thu Jun.16 08:11:07 EDT 2005 | List Contents |
| | | List Versions |
| | | [ Restore... ] |
| | | [ Find Grid File ] |
| | | View Restore History |

EP 1 796 002 A2

# FIG. 11B

Restoring All of the Files of a Folder to an Earlier Point in Time

| EXAGRID (with logo) | Advanstor Manager | Microsoft® Windows® Powered™ |

Reports | Manage | Support | Logout | Help | [?] |

Administrative State | Shares | File Restore | Migrate/Recover Shares | Web Protocols

⊙Advanstor: Grid  [Refresh]

⊙Site: SalesDemo

  ⊙SiteGRID: East

    ⊙InfiniteFiler EXAGRIDSALES1

  ⊙Repository

    ⊙GRIDdisk: GD-84WW571 (*)
    ⊙GRIDdisk: GD-54WW571
    ⊙GRIDdisk: GD-14WW571

⊙SiteGRID: West

  ⊙InfiniteFiler: EXAGRIDSALES2 (
  ⊙Repository

    ⊙GRIDdisk: GD-63WW571 (*)
    ⊙GRIDdisk: GD-C4WW571
    ⊙GRIDdisk: GD-13WW571

File Restore Browser for EXAGRIDSALES 1 [Manufacturing]

Restore Options for: Design (Solidworks)

When you restore a directory, the Advanstor restores it as it existed at the time and location that you specify below.

Select the date and time:

September 2005

| Sun | Mon | Tue | Wed | Thur | Fri | Sat |
|-----|-----|-----|-----|------|-----|-----|
|     |     |     |     | 1    | 2   | 3   |
| 4   | 5   | 6   | 7   | 8    | 9   | 10  |
| 11  | 12  | 13  | 14  | 15   | 16  | 17  |
| 18  | 19  | 20  | 21  | 22   | 23  | 24  |
| 25  | 26  | 27  | 28  | 29   | 30  |     |

─11b1

[7 ˅] [45 ˅] [AM ˅]

11b2

Restore the Directory as it Existed on: [Fri Sep 16 07:45:00 EDT 2005]  11b3

◉ Restore to original location
○ Restore to \\ EXAGRIDSALES1 \ [Support  ˅] \ [Design (Solidworks)]

☑ Includes subfolders
    Replace the shared data with the backup copy: [Always  ˅]

[Restore]

EP 1 796 002 A2

# FIG. 12

Restoring File Collections at Various Points in Time

EP 1 796 002 A2

# FIG. 13A

Continuous Checking and Correcting Data Protection Grid

Facility A ■ Facility B

EP 1 796 002 A2

# FIG. 13B

Continuous Checking and Correcting Data Protection Grid

# FIG. 13C

Continual Process for Checking
and Correcting Any Corrupted
Version of a Version Chain

Start

First Version Chain
of Protection Server — 13g

First Version of
Version Chain — 13h

Recompute its
checksum — 13i

Next
Version — 13j

Next
Version Chain — 13k

Communicate With all
Protection Servers Requesting
That They Check Their Version — 13o

Does New
Checksum Match
Original? — 13m

N → Y

All
Versions of This Chain
Processed? — 13l

N

Y

Was a Good
Version Found by Any Other
Protection Server? — 13p

N

Y

Replace Corrupted Version with
Known-Good Version — 13q

Log Uncorrectable
Version — 13n

All
Versions Chains
Processed? — 13n

N

Y

Next Version — 13s

EP 1 796 002 A2

# FIG. 14

Retention Management - Keep All Versions Option

| General |
|---|
| Protection Policy |

Protect this Share: ☑

Protection Policy Name: `test_policy`

Description: [                    ]

User Data: [                    ]

**Protection Management**

Backup Frequency: [12 Hours ▾]   Schedule at: [12:00 AM ▾]

InfiniteFiler Stage Out: [Enabled ▾]
— 14a

**Retention Management** — 

◉ Keep all versions
○ Purge prior versions that are older than [   ] [Week(s) ▾]
14b
○ Keep only the latest version

☐ When a file is deleted from this share, purge all replicas from all repositories after [   ] [Week(s) ▾]

[ Done ]  [ Cancel ]

EP 1 796 002 A2

# FIG. 15A

Retention Management - Purge Prior Versions Option

| General | Protect this Share: ☑ |
|---|---|
| Protection Policy | |

Protection Policy Name: | test_Policy |

Description: | |

User Data: | |

**Protection Management**

Backup Frequency: [12 Hours ▾]   Schedule at: [12:00 AM ▾]

InfiniteFiler Stage Out: [Enabled ▾]

**Retention Management**

○ Keep all versions

⊙ Purge prior versions that are older than [ ] [Week(s) ▾] —15c

○ Keep only the latest version   15b — Week(s) / Months(s) / Years(s)

☐ When a file is deleted from this share, purge all repositories
after [ ] [Week(s) ▾]

[Done] [Cancel]

15a

EP 1 796 002 A2

# FIG. 15B
Purge Prior Versions

15e  15f  15g  15d

| Jan | Feb | Mar | Apr | May | Jun | Jul | Aug | Sep | Oct | Nov | Dec |
|-----|-----|-----|-----|-----|-----|-----|-----|-----|-----|-----|-----|

7 Month Retention Period — On Aug 1st - All Versions Maintained

7 Month Retention Period — On Aug 2nd - January 1st Version Purged

7 Month Retention Period — On Sep 2nd - Feb 1st Version Purged

7 Month Retention Period — On Nov 2nd - April 1st Version Purged

7 Month Retention Period — On Dec 2nd - Latest Version is Retained, Even Though It's Older Than 7 Months

EP 1 796 002 A2

# FIG. 16

Retention Management - Keep Only the Latest Version

| General |
|---|
| Protection Policy |

Protect This Share ☑

Protection Policy Name: [test_policy]

Description: [                    ]

User Data: [          ]

**Protection Management**

Backup Frequency: [12 Hours ▽]  Schedule at: [12:00 AM ▽]

InfiniteFiler Stage Out: [Enabled ▽]

**Retention Management**

○ Keep all versions
○ Purge prior versions that are older than [    ] [Week(s) ▽]
◉ Keep only the latest version

16a

☐ When a file is deleted from this share, purge all replicas
   from all repositories after [    ] [Week(s) ▽]

[Done] [Cancel]

EP 1 796 002 A2

EP 1 796 002 A2

# FIG. 17A

Retention Management - Purge on Delete

| General |
|---|
| Protection Policy |

Protect This Share ☑

Protection Policy Name: [test_Policy]

Description: [ ]

User Data: [ ]

| Protection Management |
|---|

Backup Frequency: [12 Hours ▽]  Schedule at: [12:00 AM ▽]

InfiniteFiler Stage Out: [Enabled ▽]

| Retention Management |
|---|

○ Keep all versions

○ Purge prior versions that are older than [ ] [Week(s) ▽]

◉ Keep only the latest version

☑ When a file is deleted from this share, purge all replicas from all repositories after [ ] [Week(s) ▽]

| | Week(s) |
| | Month(s) |
| [Done] | Year(s) |

17a                                    17b

17c

# FIG. 17B

Purge on Delete

| Jan | Feb | Mar | Apr | May | Jun | Jul | Aug |
|-----|-----|-----|-----|-----|-----|-----|-----|

On June 1 - Entire Version Chain Retained

On July 15 - a Delete is Issued by a Client or Application
to the File Associated with this Version Chain.
For this Example, the Retention Policy will Purge all
Versions and Replicas from both Respositories one Week after the Delete
was Issued.

On July 22 - One Week has Passed by Since the Delete was
Issued. All Versions and Replicas of that File will be Purged
from both Repositories

37

# FIG. 18
Capacity Rebalancing

Protection Repository

Protection Server A

Protection Server B

Protection Server C

Protection Server D

Protection Server E

18c

18b

18a

Unbalanced Capacity

Capacity Rebalance

Protection Repository

Protection Server A

Protection Server B

Protection Server C

Protection Server D

Protection Server E

18d

Rebalanced Capacity

EP 1 796 002 A2

# FIG. 19

Two-Tiered Storage Backup Data Acts as
Second Tier of Storage for Inactive Data

# FIG. 20

Version Chains are Stored Redundantly for Each File Across Multiple Protection Servers
Within Each of Two Protection Repositories

| File Restore Browser for EXAGRIDSALES1 [dave T.] |
|---|

Find File Results for: a.txt

| GRIDdisk | | | | File State | |
|---|---|---|---|---|---|
| Site | SiteGRID | Serial | State | | |
| SalesDemo / East / GD-84WW571 (192.168.18.4) | | | Present / Online / Up | Owner | ⌇20a |
| SalesDemo / East / GD-54WW571 (192.168.18.6) | | | Present / Online / Up | NotFound | ⌇20b |
| SalesDemo / East / GD-14WW571 (192.168.18.5) | | | Present / Online / Up | Replica | |
| SalesDemo / West / GD-63WW571 (192.168.118.4) | | | Present / Online / Up | NotFound | |
| SalesDemo / West / GD-C4WW571 (192.168.118.7) | | | Present / Online / Up | Replica | ⌇20c |
| SalesDemo / West / GD-13WW571 (192.168.118.5) | | | Present / Online / Up | RemoteOwner | ⌇20d |

EP 1 796 002 A2

# FIG. 21

Renaming File A to File B - New Independent Version Chain Created

Facility A | Facility B

$t_0$

$t_1$

$t_2$

$t_3$

Time

EP 1 796 002 A2

# FIG. 22

Deleting File A at Time T1 - Finalized Version Chain

Deleting File A at Time T1

# FIG. 23

Restoring Files That Have Been Deleted

| File Restore Browser for EXAGRIDSALES1 [dave T.] | | | | |
|---|---|---|---|---|
| **Name** | | **Last Modified** | ∧ | **Tasks** |
| ◎ ⬜ a.txt | | Thu Sep 15 08:45:17 EDT 2006 | | ☑ Show Deleted |
| | | | | List Contents |
| | | | | List Versions |
| | | | | Restore... |
| | | | | Find Grid File |
| | | | | View Restore History |
| | | | ∨ | |

EP 1 796 002 A2

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 73963005 P, Therrien
- US 65912903 A, Therrien
- US 65897803 A, Therrien
- US 65964203 A, Therrien
- US 65912803 A, Therrien
- US 40968402 P, Therrien